# FASCICULE DE BREVET EUROPEEN

(11) **EP 2 795 813 B1**
(45) Date de publication et mention de la délivrance du brevet: **25.05.2016**
(21) Numéro de dépôt: 12813369.1
(22) Date de dépôt: 21.12.2012
(51) Int. Cl.: H04B 17/00

(54) **PROCÉDÉ ET SYSTÈME D'ESTIMATION D'UNE DIFFÉRENCE DE MARCHE D'UN SIGNAL CIBLE ÉMIS PAR UN ENGIN SPATIAL OU AÉRIEN**
VERFAHREN UND SYSTEM ZUR MESSUNG EINES PFADLÄNGENUNTERSCHIEDES EINES DURCH EIN RAUMSCHIFF ODER EIN FLUGZEUG ERZEUGTEN ZIELSIGNALS
METHOD AND SYSTEM FOR ESTIMATING A PATH-LENGTH DIFFERENCE OF A TARGET SIGNAL TRANSMITTED BY A SPACECRAFT OR AIRCRAFT

(30) Priorité: 22.12.2011 FR 1104013
(43) Date de publication de la demande: 29.10.2014
(73) Titulaire: Airbus Defence and Space SAS, 78130 Les Mureaux (FR)
(72) Inventeur: AYMES, Jean-Marc, F-31650 Saint Orens De Gameville (FR); SANCHEZ, Raphaël, F-31130 Balma (FR); VOULOUZAN, Frédéric, F-31500 Toulouse (FR)
(74) Mandataire: Ipside
(86) Numéro de dépôt international: PCT/EP2012/076708
(87) Numéro de publication internationale: WO 2013/093031

(56) Documents cités:
- US-A- 6 005 514
- US-A1- 2008 107 155
- US-A1- 2010 283 671
- AGHVAMI H ET AL: "Adaptive antennas: the calibration problem", IEEE COMMUNICATIONS MAGAZINE, IEEE SERVICE CENTER, PISCATAWAY, US, vol. 42, no. 12, 1 décembre 2004 (2004-12-01), pages 114-122, XP011123383, ISSN: 0163-6804

## Description

### DOMAINE TECHNIQUE

La présente invention appartient au domaine de l'observation d'engins spatiaux ou aériens, et concerne plus particulièrement un système et un procédé d'estimation d'une différence de marche entre deux trajets suivis par un signal émis par ledit engin, dit « signal cible », pour arriver sur respectivement une première antenne de réception d'une base de réception et une seconde antenne de réception de ladite base de réception.

La présente invention trouve une application particulièrement avantageuse, bien que non limitative, pour la restitution d'orbite de satellites, notamment pour des satellites en orbite géostationnaire (GEO).

### ÉTAT DE LA TECHNIQUE

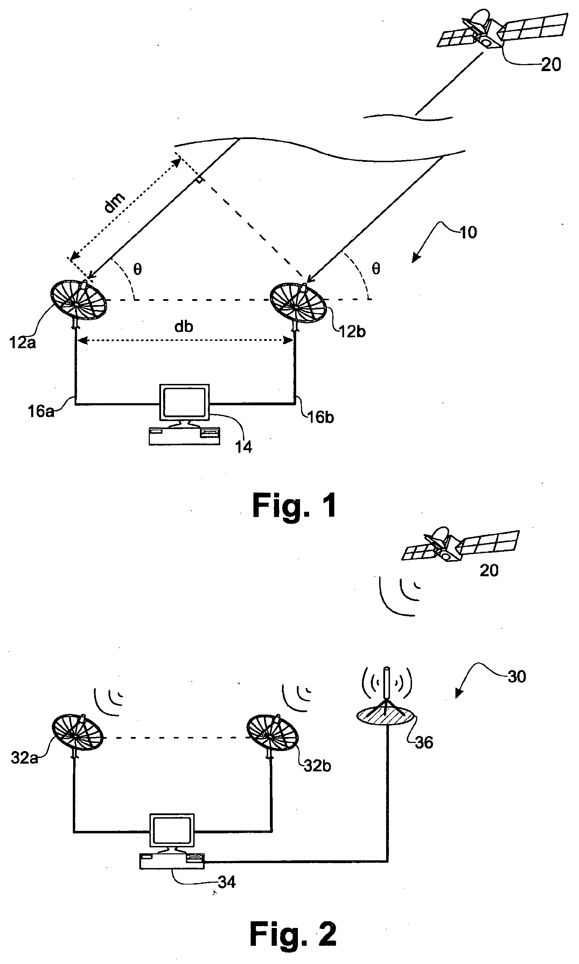

La figure 1 représente un système 10 connu de restitution d'orbite d'un satellite 20 en orbite GEO.

Le système 10 connu de restitution d'orbite comporte une base de réception formée par une première antenne de réception 12a et une seconde antenne de réception 12b. Le satellite 20 émet un signal cible en direction de la Terre, et ce signal cible est reçu par chacune des première et seconde antennes de réception 12a, 12b de la base de réception.

L'orbite du satellite 20 est restituée par exemple à partir notamment d'une estimation d'une différence de marche entre les deux trajets suivis par ledit signal cible pour arriver sur respectivement la première antenne de réception 12a et la seconde antenne de réception 12b de la base de réception.

La différence de marche, désignée par «dm» sur la figure 1, est estimée en fonction d'une différence de phase entre des signaux correspondant au signal cible reçu sur respectivement la première antenne de réception 12a et la seconde antenne de réception 12b.

La différence de marche dm est par exemple mise en oeuvre pour estimer une direction d'arrivée, désignée par « θ » sur la figure 1, du signal cible par rapport à la base de réception, généralement en supposant que ladite direction d'arrivée θ est la même sur chacune des première et seconde antennes de réception 12a, 12b (cette approximation étant valable dès lors que la distance entre la base de réception et le satellite 20 est très supérieure à la distance, désignée par « db » sur la figure 1, entre la première antenne de réception 12a et la seconde antenne de réception 12b). Suivant un autre exemple, la différence de marche dm est utilisée directement dans un modèle de trajectoire du satellite 20 pour restituer directement l'orbite dudit satellite, en prenant éventuellement en compte d'autres mesures et/ou informations.

Un dispositif 14 de traitement effectue les traitements desdits signaux reçus sur les première et seconde antennes de réception 12a, 12b. Le dispositif 14 de traitement est relié à chacune des première et seconde antennes de réception par respectivement une première chaîne de réception 16a et une seconde chaîne de réception 16b.

De manière générale, plus la distance db entre les première et seconde antennes de réception 12a, 12b de la base de réception est grande, plus l'estimation de la différence de marche dm est précise. Dans les systèmes 10 connus de restitution d'orbite GEO, la distance db est de l'ordre de quelques centaines de mètres.

Toutefois, la précision de l'estimation de la différence de marche dépend fortement de la précision des mesures de différence de phase. Les mesures de différence de phase entre les signaux correspondant au signal cible reçu sur respectivement la première antenne de réception 12a et la seconde antenne de réception 12b dépendent des déphasages introduits respectivement par la première antenne de réception 12a et la première chaîne de réception 16a d'une part et, d'autre part la seconde antenne de réception 12b et la seconde chaîne de réception 16b. Il est connu de calibrer ces déphasages, voir par exemple les documents US 6005514, US 2008/0107155 et Aghvami et al.: « Adaptive Antennas : the Calibration Problem », IEEE Communications Magazine, Vol. 42, N° 12, pages 114-122.

La précision des mesures de différence de phase dépend du rapport signal sur bruit/interférence du signal cible reçu par les première et seconde antennes de réception 12a, 12b. Le document US 2010/0283671 A1 propose une solution pour distinguer le signal cible d'autres signaux reçus, en particulier des signaux de brouilleurs.

Ainsi, si ce rapport signal sur bruit/interférence est faible, la précision de l'estimation sera faible et d'autant plus sensible à la stabilité en phase des première et seconde chaînes de réception 16a, 16b. En effet, les variations de la différence de phase mesurée comprennent à la fois des variations induites par les variations de la différence de marche dm, et des variations liées aux instabilités de phase dès première et seconde chaînes de réception 16a, 16b.

Pour améliorer le rapport signal sur bruit/interférence, les première et seconde antennes de réception 12a, 12b sont très directives afin de présenter des gains d'antennes respectifs très importants. Pour réduire les variations liées aux instabilités de phase des première et seconde chaînes de réception 16a, 16b, les éléments formant lesdites première et seconde chaînes de réception doivent être eux-mêmes très stables, et sont généralement durcis.

Un tel système 10 connu de restitution d'orbite GEO, pour obtenir de bonnes performances, s'avère complexe et coûteux à fabriquer.

En outre, le système 10 connu de restitution d'orbite GEO implique un transport du signal radiofréquences (sur fréquence porteuse ou sur fréquence intermédiaire) jusqu'au dispositif 14 de traitement qui effectue la numérisation. Ceci pose également des problèmes significatifs de coût et de génie civil sur le site d'accueil du système d'estimation (rayons de courbure acceptables des câbles, atténuations, etc.).

### EXPOSÉ DE L'INVENTION

La présente invention a pour objectif de remédier à tout ou partie des limitations des solutions de l'art antérieur, notamment celles exposés ci-avant.

A cet effet, et selon un premier aspect, la présente invention concerne un procédé d'estimation d'une direction d'arrivée ou d'une différence de marche d'un signal émis par un engin spatial ou aérien, dit « signal cible », par rapport à une base de réception comportant une première antenne de réception et une seconde antenne de réception, ledit procédé comportant une étape de mesure d'une différence de phase, dite « différence de phase utile », entre des signaux correspondant au signal cible reçu sur respectivement la première antenne de réception et la seconde antenne de réception, et une étape d'estimation de la direction d'arrivée ou de la différence de marche en fonction de mesures de différence de phase utile. L'étape de mesure de différence de phase utile comporte soit la corrélation des signaux reçus sur respectivement la première antenne de réception et la seconde antenne de réception avec un signal cible de référence, soit l'analyse desdits signaux reçus sur respectivement la première antenne de réception et la seconde antenne de réception au moyen d'une FFT ou d'une PLL.

En outre, ledit procédé comporte en outre les étapes de :
- émission d'un signal, dit « signal de calibration » à destination de la base de réception, au moyen d'une antenne d'émission,
- mesure d'une différence de phase, dite « différence de phase de calibration », entre des signaux correspondant au signal de calibration reçu sur respectivement la première antenne de réception et la seconde antenne de réception,
- compensation des variations des mesures de différence de phase de calibration sur les mesures de différence de phase utile.

Suivant des modes particuliers de mise en oeuvre, le procédé comporte l'une ou plusieurs des caractéristiques suivantes, prises isolément ou suivant toutes les combinaisons techniquement possibles.

Dans un mode particulier de mise en oeuvre, le signal cible de référence est un signal reçu sur une antenne de réception, dite « antenne directive », présentant dans la direction de l'engin un gain d'antenne supérieur à ceux de la première antenne de réception et de la seconde antenne de réception de la base de réception.

Dans un mode particulier de mise en oeuvre, l'étape de mesure de différence de phase de calibration comporte soit la corrélation des signaux reçus sur respectivement la première antenne de réception et la seconde antenne de réception avec le signal de calibration émis, soit l'analyse desdits signaux reçus sur respectivement la première antenne de réception et la seconde antenne de réception au moyen d'une FFT ou d'une PLL.

Dans un mode particulier de mise en oeuvre, le signal de calibration et le signal cible sont émis dans des bandes fréquentielles respectives se recouvrant au moins partiellement.

Dans un mode particulier de mise en oeuvre, le signal de calibration est émis en même temps que le signal cible. Dans un mode particulier de mise en oeuvre, le signal de calibration est émis de façon continue.

Dans un mode particulier de mise en oeuvre, le signal de calibration est un signal sensiblement sinusoïdal ou un signal du type à spectre étalé par un code d'étalement de spectre.

Dans un mode particulier de mise en oeuvre, les signaux reçus sur respectivement la première antenne de réception et la seconde antenne de réception sont numérisés par des convertisseurs analogique/numérique asynchrones, transmis à un dispositif de traitement par un réseau de communication, et resynchronisés par ledit dispositif de traitement par corrélation avec le signal de calibration émis.

Selon un second aspect, la présente invention concerne un système d'estimation d'une direction d'arrivée ou d'une différence de marche d'un signal émis par un engin spatial ou aérien, dit « signal cible », par rapport à une base de réception dudit système comportant une première antenne de réception et une seconde antenne de réception, ledit système comportant en outre des moyens adaptés à mesurer une différence de phase, dite « différence de phase utile », entre des signaux correspondant au signal cible reçu sur respectivement la première antenne de réception et la seconde antenne de réception, et des moyens adaptés à estimer la différence de marche en fonction de mesures de différence de phase utile. En outre, les moyens adaptés à mesurer la différence de phase utile sont configurés pour effectuer soit une corrélation des signaux reçus sur respectivement la première antenne de réception et la seconde antenne de réception avec un signal cible de référence, soit une analyse desdits signaux reçus sur respectivement la première antenne de réception et la seconde antenne de réception au moyen d'une FFT ou d'une PLL.

En outre, ledit système comporte :
- un émetteur adapté à émettre un signal, dit « signal de calibration » à destination de la base de réception, au moyen d'une antenne d'émission,
- des moyens adaptés à mesurer une différence de phase, dite « différence de phase de calibration », entre des signaux correspondant au signal de calibration reçu sur respectivement la première antenne de réception et la seconde antenne de réception,
- des moyens adaptés à compenser des variations des mesures de différence de phase de calibration sur les mesures de différence de phase utile.

Suivant des modes particuliers de réalisation, le système comporte l'une ou plusieurs des caractéristiques suivantes, prises isolément ou suivant toutes les combinaisons techniquement possibles.

Dans un mode particulier de réalisation, ledit système comporte une antenne de réception, dite « antenne directive », présentant dans la direction de l'engin un gain d'antenne supérieur à ceux de la première antenne de réception et de la seconde antenne de réception de la base de réception, et le signal cible de référence est un signal correspondant au signal cible reçu sur l'antenne directive.

Dans un mode particulier de réalisation, l'antenne directive est une antenne d'un système de géolocalisation ou une antenne d'un système de télémesure/télécommande et de mesure de distance.

Dans un mode particulier de réalisation, la première antenne de réception et la seconde antenne de réception de la base de réception sont des antennes présentant chacune un lobe principal de rayonnement de largeur égale ou supérieure à 10°, de préférence égale ou supérieure à 20°.

Dans un mode particulier de réalisation, la première antenne de réception et la seconde antenne de réception de la base de réception sont des antennes cornets.

Dans un mode particulier de réalisation, l'engin étant un satellite en orbite géostationnaire, la première antenne de réception et la seconde antenne de réception sont dirigées de sorte à avoir dans leur lobe principal de rayonnement plusieurs satellites en orbite géostationnaire.

Dans un mode particulier de réalisation, les moyens adaptés à mesurer la différence de phase de calibration sont configurés pour effectuer soit une corrélation des signaux reçus sur respectivement la première antenne de réception et la seconde antenne de réception avec le signal de calibration émis, soit une analyse desdits signaux reçus sur respectivement la première antenne de réception et la seconde antenne de réception au moyen d'une FFT ou d'une PLL.

Dans un mode particulier de réalisation, la distance, entre l'antenne d'émission de l'émetteur et au moins une parmi la première antenne de réception et la seconde antenne de réception, est inférieure à la distance entre ladite première antenne de réception et ladite seconde antenne de réception.

### PRÉSENTATION DES FIGURES

L'invention sera mieux comprise à la lecture de la description suivante, donnée à titre d'exemple nullement limitatif, et faite en se référant aux figures qui représentent :
- Figure 1 : déjà citée, une représentation schématique d'un système de restitution d'orbite GEO selon l'art antérieur,
- Figure 2 : une représentation schématique d'un système d'estimation de différence de marche de signaux selon l'invention,
- Figure 3: un diagramme représentant schématiquement les principales étapes d'un procédé d'estimation de différence de marche selon l'invention,
- Figure 4 : une représentation schématique d'exemples de signaux de calibration générant peu d'interférences vis-à-vis de signaux émis par un satellite,
- Figure 5 : une représentation schématique d'un mode préféré de réalisation d'un système d'estimation de différence de marche selon l'invention,
- Figure 6 : une représentation schématique d'une variante de réalisation du système d'estimation de la figure 5.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE L'INVENTION

La présente invention concerne notamment un système 30 et un procédé 50 d'estimation d'une différence de marche entre deux trajets suivis par un signal émis par un engin spatial ou aérien, dit « signal cible », pour arriver sur respectivement une première antenne de réception 32a d'une base de réception et une seconde antenne de réception 32b de ladite base de réception.

Dans la suite de la description, l'estimation de la différence de marche est effectuée par interférométrie, dont le principe général décrit en référence à la figure 1 repose sur la détermination de différences de phase entre des signaux correspondant au signal cible reçu par lesdites première et seconde antennes de réception 32a, 32b.

Dans la suite de la description, on se place de manière non limitative dans le cas d'un engin en orbite terrestre, et plus particulièrement dans le cas d'un engin du type satellite en orbite GEO, le système 30 d'estimation étant par exemple un sous-système d'un système de restitution d'orbite GEO.

Rien n'exclut, suivant d'autres exemples, de considérer un satellite en orbite défilante telle qu'une orbite basse (LEO) ou moyenne (MEO), ou encore de considérer des engins autres que des satellites, notamment des engins aériens tels que des missiles, des avions, des drônes, des ballons, des hélicoptères, des lanceurs de satellites, etc.

La figure 2 représente de façon schématique un exemple de système 30 d'estimation de différence de marche selon l'invention.

La base de réception du système 30 d'estimation est située sensiblement à la surface de la Terre. Par « sensiblement à la surface de la Terre », on entend notamment à même le sol, en haut d'un bâtiment, en haut d'un pylône, sur une plateforme maritime, etc. Telles qu'illustrées par la figure 2, les première et seconde antennes de réception 32a, 32b de la base de réception sont par exemple des antennes paraboliques.

Pour estimer la différence de marche d'un signal cible émis par un satellite 20 en orbite GEO, les première et seconde antennes de réception 32a, 32b de la base de réception sont de préférence séparées d'une distance comprise entre dix mètres et un kilomètre.

Le système 30 d'estimation comporte également un dispositif 34 de traitement, relié à la fois à la première antenne de réception 32a et à la seconde antenne de réception 32b de la base de réception, adapté à traiter les signaux reçus par lesdites première et seconde antennes de réception.

Dans un mode particulier de réalisation, illustré par la figure 2, le système 30 d'estimation comporte un émetteur, adapté à émettre un signal, dit « signal de calibration », à destination de la base de réception. L'émetteur comporte un dispositif de formation du signal de calibration et au moins une antenne d'émission 36 située sensiblement à la surface de la Terre. Dans un mode particulier de réalisation du système 30 d'estimation, l'antenne d'émission 36 et les première et seconde antennes de réception 32a, 32b sont fixes les unes par rapport aux autres, c'est-à-dire que leurs centres de phase sont fixes les uns par rapport aux autres.

Dans l'exemple non limitatif illustré par la figure 2, le dispositif de formation du signal de calibration est le dispositif 34 de traitement du système 30 d'estimation. Rien n'exclut, suivant d'autres exemples, d'avoir un dispositif de formation du signal de calibration distinct du dispositif 34 de traitement.

Le dispositif 34 de traitement comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes du procédé 50 d'estimation de différence de marche selon l'invention. Dans une variante, le dispositif 34 de traitement comporte également un ou des circuits logiques programmables, de type FPGA, PLD, etc., et/ou circuits intégrés spécialisés (ASIC) adaptés à mettre en oeuvre tout ou partie desdites étapes du procédé 50 d'estimation.

En d'autres termes, le dispositif 34 de traitement comporte un ensemble de moyens configurés de façon logicielle (produit programme d'ordinateur spécifique) et/ou matérielle (FPGA, PLD, ASIC, etc.) pour mettre en oeuvre les différentes étapes du procédé 50 d'estimation décrit ci-après.

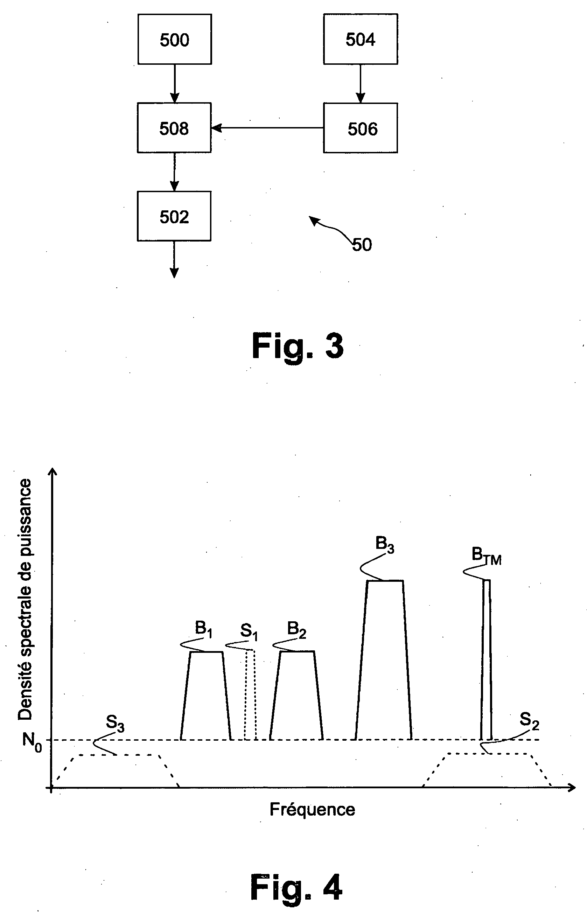

La figure 3 représente les principales étapes d'un exemple de mise en oeuvre d'un procédé 50 d'estimation de différence de marche du signal cible émis par le satellite 20.

Le procédé 50 d'estimation comporte les étapes de :
- 500 mesure d'une différence de phase, dite « différence de phase utile », entre deux signaux correspondant au signal cible : un premier signal reçu par la première antenne de réception 32a et un second signal reçu par la seconde antenne de réception 32b,
- 502 estimation de la différence de marche en fonction de mesures de différence de phase utile.

Il est à noter que la mesure de différence de phase utile peut s'avérer ambigüe lorsque la distance entre la première antenne de réception 32a et la seconde antenne de réception 32b est supérieure à la longueur d'onde sur laquelle est émis le signal cible.

A titre d'exemple, pour des fréquences de l'ordre de la dizaine de gigahertz (GHz), traditionnellement considérées pour les communications par satellite en orbite GEO, la longueur d'onde est de l'ordre de quelques centimètres à quelques dizaines de centimètres. On comprend qu'en considérant une distance entre la première antenne de réception 32a et la seconde antenne de réception 32b comprise entre dix mètres et un kilomètre, la mesure de différence de phase utile pourra s'avérer ambigüe.

Cette ambiguïté pourra être levée en utilisant d'autres moyens, considérés comme connus de l'homme de l'art, comme notamment au moyen d'une connaissance a priori de certains paramètres de l'orbite du satellite 20 (paramètres képlériens de ladite orbite et ses caractéristiques physiques : traînée aérodynamique, coefficient de pression de radiation solaire, etc.). Suivant un exemple non limitatif, les mesures de différence de phase utile sont effectuées de façon récurrente de sorte à obtenir des mesures non ambigües de la variation de la différence de phase utile (en assurant, en fonction d'une connaissance prédéfinie de la vitesse maximale de variation de la différence de marche, que la variation maximale de la différence de marche entre deux mesures successives correspond à une différence de phase utile inférieure à pi (π)). De telles mesures de la variation de la différence de phase utile peuvent être utilisées pour estimer la variation de la différence de marche du signal cible émis par le satellite 20. Ainsi, la différence de marche à un instant t1 peut être estimée dès lors que l'on dispose d'une estimation de la différence de marche à un instant t0 (éventuellement fournie par d'autres moyens) et une estimation de la variation de la différence de marche entre les instants t0 et t1.

Dans l'exemple non limitatif illustré par la figure 3, le procédé 50 d'estimation de différence de marche du signal cible comporte en outre les étapes de :
- 504 émission d'un signal de calibration à destination de la première antenne de réception 32a et de la seconde antenne de réception 32b de la base de réception,
- 506 mesure, par le dispositif 34 de traitement, d'une différence de phase, dite « différence de phase de calibration » entre deux signaux correspondant au signal de calibration : un premier signal reçu par la première antenne de réception 32a et un second signal reçu par la seconde antenne de réception 32b,
- 508 compensation des variations des mesures de différence de phase de calibration sur les mesures de différence de phase utile.

L'antenne d'émission 36 de l'émetteur étant essentiellement immobile par rapport à la base de réception, on comprend que les variations de différence de phase de calibration seront principalement dues à l'instabilité de phase des chaînes de réception reliant d'une part la première antenne de réception 32a au dispositif 34 de traitement et, d'autre part, la seconde antenne de réception 32b audit dispositif de traitement.

Ces instabilités de phase, introduites par lesdites chaînes de réception, sont indépendantes de la différence de marche du signal cible.

Ainsi, les variations de différence de phase de calibration constituent une estimation des instabilités de phase desdites chaînes de réception, et peuvent donc être utilisées pour compenser ces instabilités de phase sur les mesures de différence de phase utile.

On comprend donc que, du fait de l'émission et du traitement du signal de calibration, les instabilités de phase, introduites par les chaînes de réception reliant les première et seconde antennes de réception 32a, 32b au dispositif 34 de traitement, pourront être compensées par un traitement adapté des mesures de différence de phase de calibration et des mesures de différence de phase utile.

Par conséquent, les contraintes de conception desdites chaînes de réception peuvent être relâchées par rapport à l'art antérieur. En particulier, la stabilité en phase de ces chaînes de réception peut être inférieure à celles des solutions de l'art antérieur puisque les éventuelles instabilités de phase peuvent être compensées grâce à l'émission et au traitement du signal de calibration.

Dans un mode particulier de mise en oeuvre, au cours de l'étape 506 de mesure de différence de phase de calibration, le dispositif 34 de traitement effectue une corrélation des signaux reçus sur respectivement la première antenne de réception 32a et la seconde antenne de réception 32b par le signal de calibration émis, et calcule la différence de phase de calibration comme étant la différence entre les phases des signaux ainsi obtenus par corrélation.

Dans le cas illustré par la figure 2 où le dispositif 34 de traitement effectue également la formation du signal de calibration, ledit signal de calibration émis est directement connu dudit dispositif de traitement. Lorsque le dispositif de formation du signal de calibration est distinct du dispositif 34 de traitement, le signal de calibration est par exemple prédéfini pour le système 30 d'estimation, et un signal de calibration de référence est mémorisé dans une mémoire électronique du dispositif 34 de traitement, ledit signal de calibration de référence étant utilisé pour la corrélation avec les signaux reçus sur respectivement la première antenne de réception 32a et la seconde antenne de réception 32b de la base de réception.

On entend, par « corrélation », le produit complexe d'un premier signal par un second signal, ledit second signal étant préalablement conjugué, suivi d'une moyenne dudit produit sur une fenêtre glissante. Il est à noter que la corrélation des signaux reçus par le signal de calibration effectivement émis conduit à l'amélioration du rapport signal sur bruit/interférence pour les mesures de différence de phase de calibration. En effet, le bruit thermique est moyenné sur la durée de la fenêtre glissante (par exemple la durée du signal de calibration), de sorte que sa puissance est diminuée. En outre la puissance d'autres signaux, différents du signal de calibration, tels que le signal cible ou des signaux émis par des brouilleurs dans la bande fréquentielle dudit signal de calibration, est également réduite si ceux-ci présentent une faible corrélation avec le signal de calibration émis.

Une telle amélioration du rapport signal sur bruit/interférence par corrélation est désignée ci-après par « gain de traitement ».

Il est à noter que rien n'exclut, suivant d'autres exemples non détaillés par la suite, d'effectuer la mesure de différence de phase de calibration autrement que par corrélation. Notamment, lorsque le signal de calibration est un signal sensiblement sinusoïdal (également connu sous le nom de « Continuous Wave » ou CW), le dispositif 34 de traitement peut mesurer les phases des signaux reçus sur respectivement la première antenne de réception 32a et la seconde antenne de réception 32b à l'aide d'une PLL (« Phase Locked Loop »), d'une FFT (« Fast Fourier Transform »), etc., et calculer la différence entre lesdites phases ainsi mesurées.

Le gain de traitement, décrit ci-avant en référence à la corrélation, existe quelle que soit la méthode utilisée de mesure de différence de phase, dès lors que celle-ci met en oeuvre une intégration de mesures élémentaires.

Du fait du gain de traitement, introduit par exemple par corrélation, le rapport signal sur bruit/interférence des signaux reçus avant corrélation, correspondant au signal de calibration émis, pourra être faible sans préjudice pour les mesures de différence de phase de calibration. Par exemple, le gain de traitement pourra permettre de compenser un gain d'antenne faible, du fait par exemple que le signal de calibration est reçu dans des lobes secondaires de rayonnement des première et seconde antennes de réception 32a, 32b. Ainsi, les contraintes de positionnement de l'antenne d'émission 36 de l'émetteur, par rapport à la base de réception, seront relâchées grâce au gain de traitement.

Il est à noter que le signal de calibration est préférentiellement émis dans une même bande fréquentielle que le signal cible, ou dans une bande fréquentielle adjacente de celle du signal cible. Par « bandes fréquentielles adjacentes », on entend que lesdites bandes fréquentielles sont séparées par au plus 10 mégahertz (MHz).

En effet, les instabilités de phase, éventuellement introduites par les chemins de transmission reliant les première et seconde antennes de réception 32a, 32b au dispositif 34 de traitement, peuvent dépendre de la fréquence.

En émettant le signal de calibration dans la bande fréquentielle du signal cible, ou dans une bande fréquentielle adjacente, ledit signal de calibration sera soumis sensiblement aux mêmes instabilités de phase que le signal cible, de sorte que les variations des mesures de différence de phase de calibration seront effectivement représentatives des instabilités de phase affectant le signal cible.

Toutefois, l'émission du signal de calibration dans une bande fréquentielle proche de la bande fréquentielle utilisée pour les communications avec le satellite 20 générera des interférences. De telles interférences seront générées non seulement au niveau de la base de réception, mais également au niveau d'éventuels terminaux terrestres et/ou stations sol, se trouvant à proximité de l'émetteur du système 30 d'estimation de différence de marche, et communiquant avec le satellite 20 ou avec d'autres satellites utilisant les mêmes bandes fréquentielles.

Du fait du gain de traitement, introduit par exemple par corrélation, la puissance d'émission du signal de calibration par l'émetteur pourra être réduite, ce qui présente l'avantage de réduire les interférences, notamment lorsque le signal de calibration est émis en même temps que le signal cible. En particulier, le signal de calibration peut alors être émis de façon continue, ce qui permet d'effectuer une calibration en continu des variations liées aux instabilités de phase des première et seconde chaînes de réception 16a, 16b.

Dans un mode préféré de réalisation du système 30 d'estimation, l'antenne d'émission 36 de l'émetteur est en outre située à proximité de la base de réception. De telles dispositions permettent de réduire encore la puissance d'émission du signal de calibration, et par conséquent de réduire davantage les dimensions d'une zone autour de l'antenne d'émission 36 dans laquelle des interférences sont susceptibles d'être générées. Par exemple, la distance, entre l'antenne d'émission 36 de l'émetteur et au moins une parmi la première antenne de réception 32a et la seconde antenne de réception 32b, est inférieure à la distance entre ladite première antenne de réception 32a et ladite seconde antenne de réception 32b.

Différents types de signal de calibration peuvent être mis en oeuvre, permettant de mesurer la différence de phase de calibration tout en minimisant les interférences introduites sur le signal cible à partir duquel on cherche à estimer la différence de marche entre les trajets entre le satellite 20 et respectivement la première antenne de réception 32a et la seconde antenne de réception 32b de la base de réception.

Suivant un premier exemple, le signal de calibration est un signal CW. Un tel signal de calibration présente l'avantage d'être simple à générer. En outre, un tel signal de calibration est simple à utiliser dans la mesure où il occupe une bande fréquentielle réduite, dont la fréquence centrale peut être choisie très proche de la bande fréquentielle du signal cible considéré.

Suivant un autre exemple non limitatif, le signal de calibration est un signal du type à spectre étalé, par exemple une fréquence porteuse modulée par un code prédéfini d'étalement de spectre présentant de bonnes propriétés d'autocorrélation tel qu'une séquence pseudo-aléatoire de type PN (« Pseudo-Random Noise »), Gold, etc. Du fait de l'étalement de spectre, la densité spectrale de puissance du signal de calibration peut être rendue arbitrairement faible, la corrélation par le code d'étalement de spectre introduisant un gain de traitement d'autant plus important que le code d'étalement de spectre est long.

Un tel signal de calibration permet en outre, par corrélation des signaux reçus par le code d'étalement de spectre, de déterminer également les variations de différence d'instants de réception du signal de calibration sur respectivement la première antenne de réception 32a et la seconde antenne de réception 32b de la base de réception, et/ou les variations de différence de temps de propagation sur les chaînes de réception entre les première et seconde antennes de réception 32a, 32b et le dispositif 34 de traitement.

Dans un mode préféré de mise en oeuvre, la bande fréquentielle du signal de calibration est de largeur supérieure à celle du signal cible.

De telles dispositions permettent de resynchroniser les signaux reçus sur respectivement la première antenne de réception 32a et la seconde antenne de réception 32b. Ceci s'avère particulièrement avantageux dans le cas où lesdits signaux reçus sont numérisés par des convertisseurs analogique/numérique asynchrones, par exemple à proximité desdites première et seconde antennes de réception 32a, 32b. Les signaux numériques obtenus après numérisation peuvent alors être transmis au dispositif 34 de traitement par un réseau de communication de type Ethernet, etc. Les signaux numériques sont alors resynchronisés par le dispositif 34 de traitement par corrélation avec le signal de calibration émis.

La figure 4 représente schématiquement des exemples de spectres fréquentiels de signaux de calibration générant peu d'interférences sur le signal cible émis par le satellite 20.

Il est à noter que plusieurs types de signal cible peuvent être considérés. Suivant un premier exemple, le signal cible est un signal prédéfini connu à priori du système 30 d'estimation. Dans ce cas, l'étape 500 de mesure de différence de phase utile comporte par exemple :
- la corrélation des signaux reçus sur respectivement la première antenne de réception 32a et la seconde antenne de réception 32b avec un signal cible de référence préalablement mémorisé dans une mémoire électronique du dispositif 34 de traitement, ou
- si le signal cible est un signal CW émis par le satellite 20 (par exemple un signal CW émis pour faciliter le pointage d'antennes sensiblement à la surface de la Terre dans la direction dudit satellite, un résidu de porteuse d'un signal de télémesure, etc.) : l'analyse des signaux reçus sur respectivement la première antenne de réception 32a et la seconde antenne de réception 32b au moyen d'une FFT, d'une PLL, etc.

Suivant un autre exemple, le signal cible est un signal non connu a priori, tel qu'un signal de charge utile (c'est-à-dire un signal correspondant à des données reçues par le satellite 20 d'un terminal terrestre et/ou d'une station sol, et réémises en direction de la Terre par ledit satellite, généralement après décalage en fréquences et éventuellement après régénération des données reçues à bord dudit satellite).

La figure 4 représente schématiquement plusieurs spectres fréquentiels de signaux émis par le satellite 20 :
- un spectre fréquentiel B_{TM} d'un signal de télémesure ;
- trois spectres fréquentiels B₁, B₂ et B₃, plus larges que le spectre fréquentiel B_{TM}, chacun desdits spectres fréquentiels B₁, B₂ et B₃ correspondant à un signal de charge utile du satellite 20.

Le spectre fréquentiel du signal cible émis par le satellite 20 peut être l'un quelconque des spectres fréquentiels B₁, B₂, B₃ et B_{TM}.

La figure 4 représente également le spectre fréquentiel du bruit thermique, dont la densité spectrale de puissance est, dans l'exemple représenté, la même pour toutes les fréquences, égale à une valeur désignée par N₀. Les spectres fréquentiels B₁, B₂, B₃ et B_{TM} présentent tous une densité spectrale de puissance maximale supérieure à N₀.

Sur la figure 4, trois exemples de spectres fréquentiels possibles pour le signal de calibration sont représentés.

Suivant un premier exemple, le signal de calibration est un signal sensiblement sinusoïdal, de spectre fréquentiel S₁. Le spectre fréquentiel S₁ est de densité spectrale de puissance maximale supérieure à N₀, se trouve entre les spectres fréquentiels B₁ et B₂, et ne présente de recouvrement avec aucun des spectres fréquentiels B₁, B₂, B₃ et B_{TM}.

Suivant un second exemple, le signal de calibration est un signal du type à spectre étalé, de spectre fréquentiel S₂. Le spectre fréquentiel S₂ présente un recouvrement avec le spectre fréquentiel B_{TM}, toutefois la densité spectrale de puissance maximale du spectre fréquentiel S₂ est inférieure à N₀. Le spectre fréquentiel S₂ ne présente pas de recouvrement avec les spectres fréquentiels B₁, B₂, et B₃.

Suivant un troisième exemple, le signal de calibration est un signal du type à spectre étalé, de spectre fréquentiel S₃. Le spectre fréquentiel S₃ est de densité spectrale de puissance maximale inférieure à N₀ et ne présente de recouvrement avec aucun des spectres fréquentiels B₁, B₂, B₃ et B_{TM}.

En pratique, la réception des signaux de charge utile requiert, pour extraire les données non connues a priori incluses dans lesdits signaux de charge utile, d'utiliser des antennes de réception à grand gain et donc très directives dirigées vers le satellite dont on cherche à recevoir lesdits signaux de charge utile. En effet, un satellite en orbite GEO se trouve à une distance de la Terre d'environ 36000 kilomètres, de sorte qu'il s'avère nécessaire d'avoir un gain d'antenne important dans la direction dudit satellite pour permettre l'extraction des données incluses dans lesdits signaux de charge utile.

Il est à noter que, si les première et seconde antennes de réception 32a, 32b ne sont utilisées que pour estimer la différence de marche à partir d'un signal cible émis par le satellite 20, celles-ci ne doivent pas nécessairement être dimensionnés pour permettre l'extraction des données incluses dans lesdits signaux de charge utile.

En effet, tel que discuté précédemment, le signal cible peut être un signal prédéfini connu du système 30 d'estimation, de sorte qu'un gain de traitement pourra être introduit lors des mesures de différence de phase utile.

Du fait de ce gain de traitement, le gain d'antenne des première et seconde antennes de réception 32a, 32b peut être réduit, de sorte que l'utilisation d'antennes de réception peu directives est possible pour l'estimation de la différence de marche. Dans le cas d'un satellite en orbite GEO, une antenne de réception peut être considérée comme peu directive dès lors qu'elle présente un lobe principal de rayonnement de largeur égale ou supérieure à 10°. Dans un mode préféré de réalisation du système 30 d'estimation, la première antenne de réception 32a et la seconde antenne de réception 32b de la base de réception sont des antennes présentant chacune un lobe principal de rayonnement de largeur égale ou supérieure à 20°, voire égale ou supérieure à 30°.

Par exemple, les première et seconde antennes de réception 32a, 32b sont des antennes cornets. Suivant un autre exemple, les première et seconde antennes de réception sont des antennes omnidirectionnelles.

L'utilisation de première et seconde antennes de réception 32a, 32b peu directives, telles que des antennes cornets, permet de réduire le coût de fabrication du système 30 d'estimation.

En outre, du fait qu'elles sont peu directives, de telles première et seconde antennes de réception peuvent être dirigées de sorte à avoir dans leur lobe principal de rayonnement plusieurs satellites en orbite GEO. Un tel système 30 d'estimation peut alors être mis en oeuvre, sans avoir à changer l'orientation desdites première et seconde antennes de réception 32a, 32b, pour estimer les différences de marche pour plusieurs satellites. Par conséquent, un tel système 30 d'estimation est à la fois bas coût et permet de restituer les orbites GEO de plusieurs satellites GEO sans avoir à repointer les première et seconde antennes de réception et, éventuellement, simultanément pour les différents satellites GEO dont on cherche à restituer l'orbite GEO.

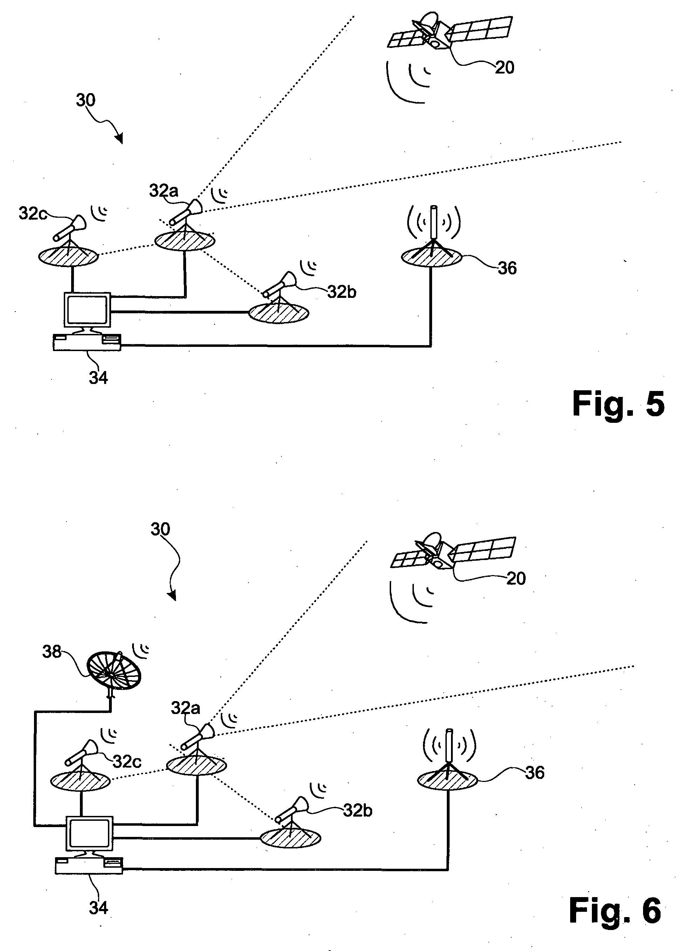

La figure 5 représente un mode préféré de réalisation d'un système 30 d'estimation de différence de marche d'un signal cible émis par un satellite 20.

Dans cet exemple, le système 30 d'estimation comporte trois antennes de réception : une première antenne de réception 32a, une seconde antenne de réception 32b et une troisième antenne de réception 32c.

Les première, seconde et troisième antennes de réception 32a, 32b, 32c sont des antennes cornets.

Les première, seconde et troisième antennes de réception 32a, 32b, 32c sont organisées en au moins deux bases de réception :
- une première base de réception formée par les première et seconde antennes de réception 32a, 32b ;
- une seconde base de réception formée par les première et troisième antennes de réception 32a, 32c.

Ainsi, la différence de marche du signal cible émis par le satellite 20 peut être estimée par rapport à chacune des première et seconde bases de réception. Rien n'exclut, suivant d'autres exemples, de considérer une troisième base de réception constituée par les seconde et troisième antennes de réception 32b, 32c.

Dans l'exemple illustré par la figure 5, le système 30 d'estimation comporte une antenne d'émission 36 distincte des antennes de réception 32a, 32b, 32c pour émettre le signal de calibration. Rien n'exclut, suivant d'autres exemples non représentés par des figures, d'utiliser une desdites antennes de réception pour l'émission dudit signal de calibration. Par exemple, l'antenne d'émission est alternativement soit la troisième antenne de réception 32c, soit la seconde antenne de réception 32b. Ainsi, lorsque la différence de marche est estimée par rapport aux première et seconde antennes de réception 32a, 32b de la première base de réception, la troisième antenne de réception 32c est utilisée pour émettre le signal de calibration. Lorsque la différence de marche est estimée par rapport aux première et troisième antennes de réception 32a, 32c de la seconde base de réception, la seconde antenne de réception 32b est utilisée pour émettre le signal de calibration.

Il est à noter toutefois que, plus les fréquences considérées sont élevées, et plus il s'avérera important de positionner l'antenne d'émission 36 dans un demi-plan avant des antennes de réception 32a, 32b, 32c. Ainsi, l'utilisation d'une des antennes de réception 32a, 32b, 32c, pour émettre le signal de calibration à destination des deux autres antennes de réception, pourra être envisagée par exemple dans les bandes fréquentielles VHF, UHF, voire L ou S si la rapport signal sur bruit/interférence est élevé. Pour les bandes fréquentielles C, X, Ku, Ka, Q, V, etc., on privilégiera une antenne d'émission 36 distincte des antennes de réception 32a, 32b, 32c, positionnée dans un demi-plan avant desdites antennes de réception.

La figure 6 représente une variante de réalisation du système 30 d'estimation de la figure 5.

Sur la figure 6, le système 30 d'estimation comporte en outre une antenne de réception additionnelle sensiblement à la surface de la Terre, dite « antenne directive » 38, présentant dans la direction du satellite 20 un gain d'antenne supérieur aux gains d'antennes, dans la direction dudit satellite, des première, seconde et troisième antennes de réception 32a, 32b, 32c. L'antenne directive 38 est par exemple une antenne parabolique.

Le système 30 d'estimation de la figure 6 est particulièrement adapté à une estimation de la différence de marche à partir d'un signal cible de type signal de charge utile, c'est-à-dire un signal incluant des données non connues a priori du système 30 d'estimation. Toutefois, le système 30 d'estimation de la figure 6 peut être mis en oeuvre pour l'estimation de la différence de marche à partir d'un signal cible de tout type, y compris un signal prédéfini connu du système 30 d'estimation.

Le gain d'antenne de l'antenne directive 38 étant plus important que ceux des première, seconde, et troisième antennes de réception 32a, 32b, 32c, le signal correspondant au signal cible reçu par l'antenne directive 38 présente un meilleur rapport signal sur bruit/interférence que sur les première, seconde et troisième antennes de réception 32a, 32b, 32c. Typiquement, le rapport signal sur bruit/interférence du signal correspondant au signal cible reçu par l'antenne directive 38 sera positif (exprimé en décibels).

Par conséquent, le signal correspondant au signal cible reçu sur l'antenne directive 38 est avantageusement utilisé comme signal cible de référence. L'étape 500 de mesure de la différence de phase utile comporte de préférence la corrélation des signaux reçus sur respectivement les première, seconde et troisième antennes de réception 32a, 32b, 32c avec le signal reçu sur l'antenne directive 38, utilisé comme signal cible de référence.

Ainsi, bien que les première, seconde et troisième antennes de réception 32a, 32b, 32c soient des antennes cornets, présentant un gain d'antenne généralement considéré comme insuffisant pour la réception de communications par satellite, cela ne porte pas préjudice à l'estimation de la différence du marche car un gain de traitement est introduit grâce à la corrélation avec le signal reçu par l'antenne directive 38.

Pour atteindre cet objectif, une seule antenne directive 38 est nécessaire, ce qui est inférieur aux systèmes d'estimation de l'art antérieur qui requièrent au moins deux telles antennes directives.

En outre, l'antenne directive 38 peut être partagée entre le système 30 d'estimation et un autre système quelconque de réception. Par exemple, l'antenne directive 38 est l'antenne d'une station sol d'un système de géolocalisation d'émetteurs de télécommunications satellitaires, ou d'un système de télémesure/télécommande et de mesure de distance (« ranging »). En d'autres termes, le système 30 d'estimation peut comporter uniquement des antennes peu directives, telles que des antennes cornets, et être relié à un autre système quelconque de réception comportant une ou plusieurs antennes directives, pour utiliser des signaux reçus par lesdites antennes directives dudit autre système de réception. Ainsi, le système 30 d'estimation bénéficie de l'autre système de réception pour permettre l'estimation de la différence de marche de signaux cibles qui autrement ne seraient pas suffisamment visibles par des antennes de réception du type antennes cornets.

Avantageusement, l'autre système de réception bénéficie également de ce partage. Dans le cas d'un système de télémesure/télécommande et de mesure de distance, dont l'un des objectifs est précisément d'effectuer la restitution d'orbite d'un ou plusieurs satellites, l'estimation de la différence de marche de signaux cibles de ces satellites permet d'améliorer la restitution d'orbite desdits satellites. Dans le cas d'un système de géolocalisation d'émetteurs de télécommunications satellitaires, l'estimation de la différence de marche de signaux cibles des satellites utilisés pour la géolocalisation permet la restitution d'orbite desdits satellites, restitution d'orbite desdits satellites qui est nécessaire pour la géolocalisation desdits émetteurs de télécommunications satellitaires.

De manière plus générale, la portée de la présente invention ne se limite pas aux modes de mise en oeuvre et de réalisation décrits ci-dessus à titre d'exemples non limitatifs, mais s'étend au contraire à toutes les modifications à la portée de l'homme de l'art.

Par exemple, on a considéré précédemment que les centres de phase de l'antenne d'émission 36 et des première et seconde antennes de réception 32a, 32b étaient fixes les uns par rapport aux autres. De telles dispositions permettent de considérer que les variations de la différence de phase de calibration sont essentiellement dues à l'instabilité de phase des chaînes de réception reliant d'une part la première antenne de réception 32a au dispositif 34 de traitement et, d'autre part, la seconde antenne de réception 32b audit dispositif de traitement.

Lorsque les centres de phase de l'antenne d'émission 36 et des première et seconde antennes de réception 32a, 32b ne sont plus fixes les uns par rapport aux autres, la modification des positions relatives desdits centres de phase entraîne une variation de phase qui s'ajoute à l'instabilité de phase des chaînes de réception, et qui affecte différemment les différences de phase utile et les différences de phase de calibration. Cela peut se produire notamment lorsque les première et seconde antennes de réception 32a, 32b sont montées mobiles afin de suivre le déplacement d'un satellite en orbite défilante, lorsque le vent sur lesdites première et seconde antennes de réception 32a, 32b modifie de manière non négligeable les positions relatives desdits centres de phase, etc. De telles variations de phase peuvent néanmoins être compensées par d'autres moyens.

Suivant un exemple non limitatif, on établit préalablement des tables de calibration associant des différences de phase de calibration associées à différents jeux de positions relatives desdits centres de phase de l'antenne d'émission 36 et des première et seconde antennes de réception 32a, 32b. Ensuite on détermine la variation des positions relatives desdits centres de phase, et les tables de calibration permettent de déterminer une variation de différence de phase de calibration induite par la variation desdites positions relatives desdits centres de phase. Cette variation de différence de phase de calibration, induite par une variation de la géométrie du système 30 d'estimation, peut alors être compensée sur les mesures de différence de phase de calibration. Après cette compensation, les variations résiduelles des mesures de différence de phase de calibration peuvent être considérées comme étant essentiellement induites par l'instabilité de phase des chaînes de réception reliant d'une part la première antenne de réception 32a au dispositif 34 de traitement et, d'autre part, la seconde antenne de réception 32b audit dispositif de traitement.

Pour déterminer la variation des positions relatives desdits centres de phase, l'antenne d'émission 36 et les première et seconde antennes de réception 32a, 32b sont par exemple équipées de capteurs de position de leurs centres de phase, considérés comme connus de l'homme de l'art. Alternativement, plusieurs antennes d'émission 36, considérées comme fixes ou bien équipées de tels capteurs de position, sont utilisées pour déterminer les positions des centres de phase des première et seconde antennes de réception 32a, 32b par triangulation.

La variation de différence de phase utile, induite par la variation de la géométrie du système 30 d'estimation, n'est pas spécifique à l'invention et peut être compensée par tout moyen connu de l'homme de l'art.

De manière plus générale, on comprend également que l'invention n'est pas limitée à un nombre particulier d'antennes de réception, mais s'étend au contraire à un nombre Nb (Nb ≥ 2) quelconque d'antennes de réception.

En outre, les caractéristiques relatives exclusivement à la mesure de différence de phase utile peuvent être considérées indépendamment de la calibration. C'est le cas notamment de la caractéristique selon laquelle la mesure de différence de phase utile comporte soit la corrélation des signaux reçus sur respectivement la première antenne de réception 32a et la seconde antenne de réception 32b avec un signal cible de référence, soit l'analyse desdits signaux au moyen d'une FFT ou d'une PLL,

De plus, l'invention a été décrite en considérant l'estimation d'une différence de marche, qui peut à son tour être utilisée pour estimer la direction d'arrivée du signal cible. On comprend cependant que l'invention est applicable à toute estimation de la direction d'arrivée du signal cible par rapport à la base de réception qui ne comporterait pas d'estimation de différence marche mais utiliserait néanmoins des mesures de différence de phase utile. Suivant un exemple non limitatif, la direction d'arrivée du signal cible peut être estimée au moyen d'un algorithme de type MUSIC (voir par exemple : « Multiple Emitter Location and Signal Parameter Estimation », R. O. Schmidt, IEEE Transactions on Antennas and Propagation, Vol. 34, N° 3, Mars 1986), les différences de phase utile étant mesurées comme décrit ci-avant et/ou compensées comme décrit ci-avant grâce à des mesures de différence de phase de calibration.

La description ci-avant illustre clairement que par ses différentes caractéristiques et leurs avantages, la présente invention atteint les objectifs qu'elle s'était fixés.

En particulier, on comprend que le système 30 d'estimation est simple et peu coûteux à fabriquer dans la mesure où les contraintes sur les chaînes de réception sont fortement relâchées grâce à l'émission et au traitement du signal de calibration. En outre, les antennes de réception du système 30 pouvant être dimensionnées pour l'estimation de différence de marche, elles n'ont pas à être très directives et peuvent par exemple être des antennes cornets de directivité et de dimensions inférieures aux antennes de réception utilisées dans les systèmes d'estimation de l'art antérieur. De plus, le système 30 d'estimation selon l'invention peut être avantageusement relié à d'autres systèmes de réception, comme par exemple un système de géolocalisation d'émetteurs de télécommunications satellitaires, ou un système de télémesure/télécommande et de mesure de distance, pour permettre ou faciliter l'estimation de la différence de marche, et réciproquement contribuer à la connaissance des orbites des satellites visés par lesdits systèmes.

## Revendications

1. Procédé (50) d'estimation d'une différence de marche entre deux trajets suivis par un signal émis par un engin (20) spatial ou aérien, dit « signal cible », pour arriver sur respectivement une première antenne de réception (32a) et une seconde antenne de réception (32b) d'une base de réception, ledit procédé comportant une étape (500) de mesure d'une différence de phase, dite « différence de phase utile », entre des signaux correspondant au signal cible reçu sur respectivement la première antenne de réception (32a) et la seconde antenne de réception (32b), et une étape (502) d'estimation de la différence de marche en fonction de mesures de différence de phase utile, ledit procédé (50) comportant en outre les étapes de :
- (504) émission d'un signal, dit « signal de calibration » à destination de la base de réception, au moyen d'une antenne d'émission (36),
- (506) mesure d'une différence de phase, dite « différence de phase de calibration », entre des signaux correspondant au signal de calibration reçu sur respectivement la première antenne de réception (32a) et la seconde antenne de réception (32b),
- (508) compensation des variations des mesures de différence de phase de calibration sur les mesures de différence de phase utile
et dans lequel l'étape (500) de mesure de différence de phase utile comporte soit la corrélation des signaux reçus sur respectivement la première antenne de réception (32a) et la seconde antenne de réception (32b) avec un signal cible de référence, soit l'analyse desdits signaux reçus sur respectivement la première antenne de réception (32a) et la seconde antenne de réception (32b) au moyen d'une FFT ou d'une PLL.

2. Procédé (50) selon la revendication 1, **caractérisé en ce que** le signal cible de référence est un signal reçu sur une antenne de réception, dite « antenne directive » (38), présentant dans la direction de l'engin un gain d'antenne supérieur à ceux de la première antenne de réception (32a) et de la seconde antenne de réception (32b) de la base de réception.

3. Procédé (50) selon l'une quelconque des revendications précédentes, **caractérisé en ce que** l'étape (506) de mesure de différence de phase de calibration comporte soit la corrélation des signaux reçus sur respectivement la première antenne de réception (32a) et la seconde antenne de réception (32b) avec le signal de calibration émis, soit l'analyse desdits signaux reçus sur respectivement la première antenne de réception (32a) et la seconde antenne de réception (32b) au moyen d'une FFT ou d'une PLL.

4. Procédé (50) selon l'une quelconque des revendications précédentes, **caractérisé en ce que** le signal de calibration et le signal cible sont émis dans des bandes fréquentielles respectives se recouvrant au moins partiellement.

5. Procédé (50) selon l'une quelconque des revendications précédentes, **caractérisé en ce que** le signal de calibration est émis en même temps que le signal cible.

6. Procédé (50) selon la revendication 5, **caractérisé en ce que** le signal de calibration est émis de façon continue.

7. Procédé (50) selon l'une quelconque des revendications précédentes, **caractérisé en ce que** le signal de calibration est un signal sensiblement sinusoïdal ou un signal du type à spectre étalé par un code d'étalement de spectre.

8. Procédé (50) selon l'une quelconque des revendications précédentes, **caractérisé en ce que** les signaux reçus sur respectivement la première antenne de réception (32a) et la seconde antenne de réception (32b) sont numérisés par des convertisseurs analogique/numérique asynchrones, transmis à un dispositif (34) de traitement par un réseau de communication, et resynchronisés par ledit dispositif de traitement par corrélation avec le signal de calibration émis.

9. Produit programme d'ordinateur, **caractérisé en ce qu'**il comporte un ensemble d'instructions de code de programme qui, lorsqu'elles sont exécutées par un processeur, mettent en oeuvre un procédé (50) d'estimation de différence de marche selon l'une des revendications 1 à 8.

10. Système (30) d'estimation d'une différence de marche entre deux trajets suivis par un signal émis par un engin (20) spatial ou aérien, dit « signal cible », pour arriver sur respectivement une première antenne de réception (32a) et une seconde antenne de réception (32b) d'une base de réception dudit système, ledit système comportant en outre des moyens adaptés à mesurer une différence de phase, dite « différence de phase utile », entre des signaux correspondant au signal cible reçu sur respectivement la première antenne de réception (32a) et la seconde antenne de réception (32b), et des moyens adaptés à estimer la différence de marche en fonction de mesures de différence de phase utile, ledit système (30) comportant en outre :
- un émetteur adapté à émettre un signal, dit « signal de calibration» à destination de la base de réception, au moyen d'une antenne d'émission (36),
- des moyens adaptés à mesurer une différence de phase, dite « différence de phase de calibration », entre des signaux correspondant au signal de calibration reçu sur respectivement la première antenne de réception (32a) et la seconde antenne de réception (32b),
- des moyens adaptés à compenser des variations des mesures de différence de phase de calibration sur les mesures de différence de phase utile
et dans lequel les moyens adaptés à mesurer la différence de phase utile sont configurés pour effectuer soit une corrélation des signaux reçus sur respectivement la première antenne de réception (32a) et la seconde antenne de réception (32b) avec un signal cible de référence, soit une analyse desdits signaux reçus sur respectivement la première antenne de réception (32a) et la seconde antenne de réception (32b) au moyen d'une FFT ou d'une PLL.

11. Système (30) selon la revendication 10, **caractérisé en ce qu'**il comporte une antenne de réception, dite « antenne directive » (38), présentant dans la direction de l'engin un gain d'antenne supérieur à ceux de la première antenne de réception (32a) et de la seconde antenne de réception (32b) de la base de réception, et **en ce que** le signal cible de référence est un signal correspondant au signal cible reçu sur l'antenne directive (38).

12. Système (30) selon la revendication 11, **caractérisé en ce que** l'antenne directive est une antenne d'un système de géolocalisation ou une antenne d'un système de télémesure/télécommande et de mesure de distance.

13. Système (30) selon l'une quelconque des revendications 10 à 12, **caractérisé en ce que** la première antenne de réception (32a) et la seconde antenne de réception (32b) de la base de réception sont des antennes présentant chacune un lobe principal de rayonnement de largeur égale ou supérieure à 20°.

14. Système (30) selon la revendication 13, **caractérisé en ce que** la première antenne de réception (32a) et la seconde antenne de réception (32b) de la base de réception sont des antennes cornets.

15. Système (30) selon l'une quelconque des revendications 13 à 14, **caractérisé en ce que**, l'engin (20) étant un satellite en orbite géostationnaire, la première antenne de réception (32a) et la seconde antenne de réception (32b) sont dirigées de sorte à avoir dans leur lobe principal de rayonnement plusieurs satellites en orbite géostationnaire.

16. Système (30) selon l'une quelconque des revendications 10 à 15, **caractérisé en ce que** les moyens adaptés à mesurer la différence de phase de calibration sont configurés pour effectuer soit une corrélation des signaux reçus sur respectivement la première antenne de réception (32a) et la seconde antenne de réception (32b) avec le signal de calibration émis, soit une analyse desdits signaux reçus sur respectivement la première antenne de réception (32a) et la seconde antenne de réception (32b) au moyen d'une FFT ou d'une PLL.

17. Système (30) selon l'une quelconque des revendications 10 à 16, **caractérisé en ce que** la distance, entre l'antenne d'émission (36) de l'émetteur et au moins une parmi la première antenne de réception (32a) et la seconde antenne de réception (32b), est inférieure à la distance entre ladite première antenne de réception (32a) et ladite seconde antenne de réception (32b).

## Patentansprüche

1. Verfahren (50) zur Schätzung einer Wegdifferenz zwischen zwei von einem von einem Raum- oder Luftfahrzeug (20) gesendeten « Zielsignal » genannten Signal verfolgten Pfaden, um zu einer ersten Empfangsantenne (32a) bzw. zweiten Empfangsantenne (32b) einer Empfangsbasis zu gelangen, wobei das Verfahren einen Schritt (500) der Messung einer « Nutzphasendifferenz » genannten Phasendifferenz zwischen Signalen, die dem an der ersten Empfangsantenne (32a) bzw. der zweiten Empfangsantenne (32b) empfangenen Zielsignal entsprechen, und einen Schritt (502) der Schätzung der Wegdifferenz abhängig von Nutzphasendifferenzmessungen aufweist, wobei das Verfahren (50) außerdem die folgenden Schritte aufweist:
- (504) Senden eines « Kalibrierungssignal » genannten Signals an die Empfangsbasis mittels einer Sendeantenne (36),
- (506) Messen einer « Kalibrierungsphasendifferenz » genannten Phasendifferenz zwischen dem an der ersten Empfangsantenne (32a) bzw. der zweiten Empfangsantenne (32b) empfangenen Kalibrierungssignal entsprechenden Signalen,
- (508) Kompensieren der Schwankungen der Kalibrierungsphasendifferenzmessungen an den Nutzphasendifferenzmessungen,
und wobei der Schritt (500) der Nutzphasendifferenzmessung entweder die Korrelation der an der ersten Empfangsantenne (32a) bzw. zweiten Empfangsantenne (32b) empfangenen Signale mit einem Bezugs-Zielsignal oder die Analyse der an der ersten Empfangsantenne (32a) bzw. zweiten Empfangsantenne (32b) empfangenen Signale mittels einer FFT oder einer PLL aufweist.

2. Verfahren (50) nach Anspruch 1, **dadurch gekennzeichnet, dass** das Bezugs-Zielsignal ein an einer « Richtantenne » genannten Empfangsantenne (38) empfangenes Signal ist, die in Richtung des Fahrzeugs einen größeren Antennengewinn aufweist als diejenigen der ersten Empfangsantenne (32a) und der zweiten Empfangsantenne (32b) der Empfangsbasis.

3. Verfahren (50) nach einem der vorhergehenden Ansprüche, **dadurch gekennzeichnet, dass** der Schritt (506) der Kalibrierungsphasendifferenzmessung entweder die Korrelation der an der ersten Empfangsantenne (32a) bzw. der zweiten Empfangsantenne (32b) empfangenen Signale mit dem gesendeten Kalibrierungssignal oder die Analyse der an der ersten Empfangsantenne (32a) bzw. der zweiten Empfangsantenne (32b) empfangenen Signale mittels einer FFT oder einer PLL aufweist.

4. Verfahren (50) nach einem der vorhergehenden Ansprüche, **dadurch gekennzeichnet, dass** das Kalibrierungssignal und das Zielsignal in jeweiligen Frequenzbändern gesendet werden, die sich zumindest teilweise überlappen.

5. Verfahren (50) nach einem der vorhergehenden Ansprüche, **dadurch gekennzeichnet, dass** das Kalibrierungssignal zur gleichen Zeit gesendet wird wie das Zielsignal.

6. Verfahren (50) nach Anspruch 5, **dadurch gekennzeichnet, dass** das Kalibrierungssignal durchgehend gesendet wird.

7. Verfahren (50) nach einem der vorhergehenden Ansprüche, **dadurch gekennzeichnet, dass** das Kalibrierungssignal ein im Wesentlichen sinusförmiges Signal oder ein Signal von der Art mit durch einen Spreizspektrumcode gespreiztem Spektrum ist.

8. Verfahren (50) nach einem der vorhergehenden Ansprüche, **dadurch gekennzeichnet, dass** die an der ersten Empfangsantenne (32a) bzw. der zweiten Empfangsantenne (32b) empfangenen Signale durch asynchrone Analog/Digital-Wandler digitalisiert werden, an eine Verarbeitungsvorrichtung (34) über ein Verbindungsnetz übertragen und von der Verarbeitungsvorrichtung durch Korrelation mit dem gesendeten Kalibrierungssignal neu synchronisiert werden.

9. Computerprogrammprodukt, **dadurch gekennzeichnet, dass** es eine Einheit von Programmcodeanweisungen aufweist, die, wenn sie von einem Prozessor ausgeführt werden, ein Verfahren (50) zur Wegdifferenzschätzung nach einem der Ansprüche 1 bis 8 anwenden.

10. System (30) zur Schätzung einer Wegdifferenz zwischen zwei von einem von einem Raum- oder Luftfahrzeug (20) gesendeten « Zielsignal » genannten Signal verfolgten Pfaden, um zu einer ersten Empfangsantenne (32a) bzw. zweiten Empfangsantenne (32b) einer Empfangsbasis des Systems zu gelangen, wobei das System außerdem Einrichtungen, die geeignet sind, eine « Nutzphasendifferenz » genannte Phasendifferenz zwischen Signalen zu messen, die dem an der ersten Empfangsantenne (32a) bzw. der zweiten Empfangsantenne (32b) empfangenen Zielsignal entsprechen, und Einrichtungen aufweist, die geeignet sind, die Wegdifferenz abhängig von Nutzphasendifferenzmessungen zu schätzen, **dadurch gekennzeichnet, dass** das System (30) außerdem aufweist:
- einen Sender, der ein « Kalibrierungssignal » genanntes Signal an die Empfangsbasis mittels einer Sendeantenne (36) senden kann,
- Einrichtungen, die geeignet sind, eine « Kalibrierungsphasendifferenz » genannte Phasendifferenz zwischen Signalen, die dem an der ersten Empfangsantenne (32a) bzw. der zweiten Empfangsantenne (32b) empfangenen Kalibrierungssignal entsprechen, zu messen,
- Einrichtungen, die geeignet sind, um Schwankungen der Kalibrierungsphasendifferenzmessungen an den Nutzphasendifferenzmessungen zu kompensieren,
und wobei die Einrichtungen, die geeignet sind, die Nutzphasendifferenz zu messen, konfiguriert sind, entweder eine Korrelation der an der ersten Empfangsantenne (32a) bzw. der zweiten Empfangsantenne (32b) empfangenen Signale mit einem Bezugs-Zielsignal oder eine Analyse der an der ersten Empfangsantenne (32a) bzw. der zweiten Empfangsantenne (32b) empfangenen Signale mittels einer FFT oder einer PLL durchzuführen.

11. System (30) nach Anspruch 10, **dadurch gekennzeichnet, dass** es eine « Richtantenne » genannte Empfangsantenne (38) aufweist, die in der Richtung des Fahrzeugs einen Antennengewinn aufweist, der größer ist als diejenigen der ersten Empfangsantenne (32a) und der zweiten Empfangsantenne (32b) der Empfangsbasis, und dass das Bezugs-Zielsignal ein Signal ist, das dem an der Richtantenne (38) empfangenen Zielsignal entspricht.

12. System (30) nach Anspruch 11, **dadurch gekennzeichnet, dass** die Richtantenne eine Antenne eines Geolokalisierungssystems oder eine Antenne eines Fernmess-/Fernsteuerungs- und Abstandsmesssystems ist.

13. System (30) nach einem der Ansprüche 10 bis 12, **dadurch gekennzeichnet, dass** die erste Empfangsantenne (32a) und die zweite Empfangsantenne (32b) der Empfangsbasis Antennen sind, die je eine Hauptstrahlungskeule einer Breite gleich oder größer als 20° aufweisen.

14. System (30) nach Anspruch 13, **dadurch gekennzeichnet, dass** die erste Empfangsantenne (32a) und die zweite Empfangsantenne (32b) der Empfangsbasis Hornantennen sind.

15. System (30) nach einem der Ansprüche 13 bis 14, **dadurch gekennzeichnet, dass**, da das Fahrzeug (20) ein Satellit in geostationärer Umlaufbahn ist, die erste Empfangsantenne (32a) und die zweite Empfangsantenne (32b) so ausgerichtet sind, dass sie in ihrer Hauptstrahlungskeule mehrere Satelliten in geostationärer Umlaufbahn haben.

16. System (30) nach einem der Ansprüche 10 bis 15, **dadurch gekennzeichnet, dass** die Einrichtungen, die geeignet sind, die Kalibrierungsphasendifferenz zu messen, konfiguriert sind, entweder eine Korrelation der an der ersten Empfangsantenne (32a) bzw. zweiten Empfangsantenne (32b) empfangenen Signale mit dem gesendeten Kalibrierungssignal oder eine Analyse der an der ersten Empfangsantenne (32a) bzw. zweiten Empfangsantenne (32b) empfangenen Signale mittels einer FFT oder einer PLL durchzuführen.

17. System (30) nach einem der Ansprüche 10 bis 16, **dadurch gekennzeichnet, dass** der Abstand zwischen der Sendeantenne (36) des Senders und mindestens einer von der ersten Empfangsantenne (32a) und der zweiten Empfangsantenne (32b) kleiner ist als der Abstand zwischen der ersten Empfangsantenne (32a) und der zweiten Empfangsantenne (32b).

## Claims

1. A method (50) for estimating a path-length difference between two paths followed by a signal transmitted by a spacecraft or aircraft (20), referred to as "target signal", to arrive respectively on a first receiving antenna (32a) and a second receiving antenna (32b) of a receiving base, said method comprising a step (500) of measuring a phase difference, referred to as "useful phase difference", between signals corresponding to the target signal received respectively on the first receiving antenna (32a) and the second receiving antenna (32b), and a step (502) for estimating the path-length difference as a function of useful phase difference measurements, said method (50) also comprising the steps of:
- (504) transmitting a signal, referred to as "calibration signal", to the receiving base, by means of a transmitting antenna (36),
- (506) measuring a phase difference, referred to as "calibration phase difference", between signals corresponding to the calibration signal received respectively on the first receiving antenna (32a) and the second receiving antenna (32b),
- (508) compensating variations of the calibration phase difference measurements on the useful phase difference measurements
and wherein the step (500) of measuring the useful phase difference comprises either the correlation of the signals received respectively on the first receiving antenna (32a) and the second receiving antenna (32b) with a reference target signal, or the analysis of said signals received respectively on the first receiving antenna (32a) and the second receiving antenna (32b) by means of an FFT or of a PLL.

2. The method (50) as claimed in claim 1, **characterized in that** the reference target signal is a signal received on a receiving antenna, referred to as "directional antenna" (38), exhibiting, in the direction of the craft, an antenna gain greater than those of the first receiving antenna (32a) and of the second receiving antenna (32b) of the receiving base.

3. The method (50) as claimed in any one of the preceding claims, **characterized in that** the step (506) of measuring calibration phase difference comprises either the correlation of the signals received respectively on the first receiving antenna (32a) and the second receiving antenna (32b) with the transmitted calibration signal, or the analysis of said signals received respectively on the first receiving antenna (32a) and the second receiving antenna (32b) by means of an FFT or of a PLL.

4. The method (50) as claimed in any one of the preceding claims, **characterized in that** the calibration signal and the target signal are transmitted in at least partially overlapping respective frequency bands.

5. The method (50) as claimed in any one of the preceding claims, **characterized in that** the calibration signal is transmitted at the same time as the target signal.

6. The method (50) as claimed in claim 5, **characterized in that** the calibration signal is transmitted continuously.

7. The method (50) as claimed in any one of the preceding claims, **characterized in that** the calibration signal is a substantially sinusoidal signal or a signal of the type with spectrum spread by a spectrum spreading code.

8. The method (50) as claimed in any one of the preceding claims, **characterized in that** the signals received respectively on the first receiving antenna (32a) and the second receiving antenna (32b) are digitized by asynchronous analog/digital converters, transmitted to a processing device (34) via a communication network, and resynchronized by said processing device by correlation with the transmitted calibration signal.

9. A computer program product, **characterized in that** it comprises a set of program code instructions which, when they are run by a processor, implement a path different estimation method (50) as claimed in one of claims 1 to 8.

10. A system (30) for estimating a path-length difference between two paths followed by a signal transmitted by a spacecraft or aircraft (20), referred to as "target signal", to arrive respectively on a first receiving antenna (32a) and a second receiving antenna (32b) of a receiving base of said system, said system also comprising means suitable for measuring a phase difference, referred to as "useful phase difference", between signals corresponding to the target signal received respectively on the first receiving antenna (32a) and the second receiving antenna (32b), and means suitable for estimating the path-length difference as a function of useful phase difference measurements, said system (30) also comprising:
- a transmitter suitable for transmitting a signal, referred to as "calibration signal", to the receiving base, by means of a transmitting antenna (36),
- means suitable for measuring a phase difference, referred to as "calibration phase difference", between signals corresponding to the calibration signal received respectively on the first receiving antenna (32a) and the second receiving antenna (32b),
- means suitable for compensating variations of the calibration phase difference measurements on the useful phase difference measurements
and wherein the means suitable for measuring the useful phase difference are configured to perform either a correlation of the signals received respectively on the first receiving antenna (32a) and the second receiving antenna (32b) with a reference target signal, or an analysis of said signals received respectively on the first receiving antenna (32a) and the second receiving antenna (32b) by means of an FFT or of a PLL.

11. The system (30) as claimed in claim 10, **characterized in that** it comprises a receiving antenna, referred to as "directional antenna" (38), exhibiting, in the direction of the craft, an antenna gain greater than those of the first receiving antenna (32a) and of the second receiving antenna (32b) of the receiving base, and **in that** the reference target signal is a signal corresponding to the target signal received on the directional antenna (38).

12. The system (30) as claimed in claim 11, **characterized in that** the directional antenna is an antenna of a geolocation system or an antenna of a telemetry/remote control and ranging system.

13. The system (30) as claimed in any one of claims 10 to 12, **characterized in that** the first receiving antenna (32a) and the second receiving antenna (32b) of the receiving base are antennas each exhibiting a main radiation lobe of a width equal to or greater than 20°.

14. The system (30) as claimed in claim 13, **characterized in that** the first receiving antenna (32a) and the second receiving antenna (32b) of the receiving base are horn antennas.

15. The system (30) as claimed in any one of claims 13 to 14, **characterized in that**, the craft (20) being a satellite in geostationary orbit, the first receiving antenna (32a) and the second receiving antenna (32b) are directed in such a way as to have, in their main radiation lobe, several satellites in geostationary orbit.

16. The system (30) as claimed in any one of claims 10 to 15, **characterized in that** the means suitable for measuring the calibration phase difference are configured to perform either a correlation of the signals received respectively on the first receiving antenna (32a) and the second receiving antenna (32b) with the transmitted calibration signal, or an analysis of said signals received respectively on the first receiving antenna (32a) and the second receiving antenna (32b) by means of an FFT or of a PLL.

17. The system (30) as claimed in any one of claims 10 to 16, **characterized in that** the distance, between the transmitting antenna (36) of the transmitter and at least one out of the first receiving antenna (32a) and the second receiving antenna (32b), is less than the distance between said first receiving antenna (32a) and said second receiving antenna (32b).
